# EUROPÄISCHE PATENTSCHRIFT

(11) **EP 1 245 600 B1**
(45) Veröffentlichungstag und Bekanntmachung des Hinweises auf die Patenterteilung: **15.11.2006**
(21) Anmeldenummer: 02005335.1
(22) Anmeldetag: 14.03.2002
(51) Int. Cl.: C08F 297/06

(54) **Verfahren zur Herstellung eines Blockcopolymerisates auf Basis von konjugierten Diolefinen und polaren Monomeren**
Process for the preparation of block copolymers of conjugated dienes and polar monomers
Procédé pour la préparation des copolymères block a base d'oléfines conjuguées et de monomères polaires

(30) Priorität: 27.03.2001 DE 10115106
(43) Veröffentlichungstag der Anmeldung: 02.10.2002
(73) Patentinhaber: LANXESS Deutschland GmbH, 51369 Leverkusen (DE)
(72) Erfinder: Windish, Heike, Dr., 51373 Leverkusen (DE); Obrecht, Werner, Dr., 47447 Moers (DE); Stere, Cristina, Dr., 51373 Leverkusen (DE); Scholl, Thomas, Dr., 51469 Bergisch Gladbach (DE); Nuyken, Oskar, Prof. Dr., 81927 München (DE); Friebe, Lars, 80807 München (DE); Vierle, Mario, 81547 München (DE)

(56) Entgegenhaltungen:
- EP-A- 0 298 667
- EP-A- 0 431 706
- GB-A- 821 971
- US-A- 5 686 371
- QUIRK R P ET AL: "Butadiene polymerization using neodymium versatate-based catalysts: catalyst optimization and effects of water and excess versatic acid" POLYMER, ELSEVIER SCIENCE PUBLISHERS B.V, GB, Bd. 41, Nr. 15, Juli 2000 (2000-07), Seiten 5903-5908, XP004193905 ISSN: 0032-3861
- KROSCHWITZ JAUELINE, HOWE-GRANT MARY: "Kirk Othmer Encyclopedia of chemical technology, Vol. 9: Elastomers, synthetic: Polyisoprene " , JOHN WILEY & SONS , NEW YORK 1994 XP002205150 * Seite 1 - Seite 9; Tabelle 2 *

## Beschreibung

Die vorliegende Erfindung betrifft ein Blockcopolymerisat auf Basis von konjugierten Diolefinen und polaren Monomeren und ein Verfahren zur Herstellung des Blockcopolymerisates in Gegenwart von Katalysatoren der Seltenen Erden.

Die Polymerisation von konjugierten Diolefinen ist seit langem bekannt und beispielsweise beschrieben von W. Hoffmann, Rubber Technology Handbook, Hanser Publishers (Carl Hanser Verlag) München, Wien, New York, 1989. So wird beispielsweise Polybutadien heute in überwiegendem Maße hergestellt durch Lösungspolymerisation mit Hilfe von Koordinationskatalysatoren des Ziegler-Natta-Typs, beispielsweise auf Basis von Titan-, Cobalt-, Nickel- und Neodym-Verbindungen, oder in Gegenwart von Alkyllithium-Verbindungen. Die Art des jeweils verwendeten Lösemittels hängt stark vom eingesetzten Katalysatortyp ab. Bevorzugt werden Benzol oder Toluol sowie aliphatische oder cycloaliphatische Kohlenwasserstoffe eingesetzt.

Die Polymerisation von ungesättigten organischen Verbindungen, insbesondere konjugierten Dienen, in Gegenwart von Katalysatoren auf Basis von Seltenen Erdmetallen ist seit langem bekannt (siehe z.B. DE-A 28 33 721, US-A 4 429 089, EP-A 76 535, EP-A 92 270, EP-A 92 271, EP-A 207 558, WO-A 93/05083, US-A 5 627 119, EP-A 667 357, US-A 3 478 901, EP-A 637 589). So wird beispielsweise in EP-A 11 184 und EP-A 7027 ein Katalysatorsystem auf Basis der Seltenen Erdmetalle, insbesondere auf Basis von Neodymverbindungen, vorgestellt, das sich sehr gut für die Polymerisation von konjugierten Dienen, insbesondere Butadien, eignet. Diese Katalysatoren liefern bei der Polymerisation von beispielsweise Butadien ein Polybutadien in sehr guten Ausbeuten und mit hoher Selektivität, das sich insbesondere durch einen hohen Anteil an *cis*-1,4-Einheiten auszeichnet.

Weiterhin ist bekannt, anionische Initiatoren, wie Butyllithium, für die Polymerisation von Butadien in Hexan einzusetzen. Anionische Katalysatoren sind ebenfalls zu einer Blockcopolymerisation von Butadien mit weiteren unpolaren Monomeren, wie Styrol und Isopren, oder polaren Monomeren, wie Ethylenoxid, Propylenoxid und Acrylaten, geeignet [H. L. Hsieh, R. P. Quirk, Marcel Dekker Inc., New York - Basel, 1996; R. K. Sadhir, R. M. Luck, Expanding Monomers, CRC Press Boca Raton, 1992]. Dabei wird zuerst das Butadien in inerten Lösemittel polymerisiert und anschließend nach Zugabe eines weiteren Monomeren in dem lebendem System ein zweiter Block aus dem weiteren Monomeren gebildet. Auch die Herstellung von Dreiblockcopolymeren ist mit diesen anionischen Initiatoren möglich.

Der Nachteil besteht darin, dass es mit anionischen Initiatoren nicht möglich ist, unter anwendungstechnisch relevanten Bedingungen ein hoch *cis*-haltiges Copolymer herzustellen, bei dem der *cis*-1,4-Gehalt des Butadienblocks über 50 % beträgt.

Es ist bekannt, dass Compounds für Reifenmischungen, insbesondere für Laufflächen, aus mehreren Kautschuken und Füllstoffen bestehen, um ein Optimum der Eigenschaften, wie z.B. des Rollwiderstandes, der Abrieb- und der Nassrutschfestigkeit, zu erzielen. Bei diesen Kautschuken werden bevorzugt hoch *cis*-haltige Polydiene, wie die beiden synthetischen Kautschuke Polybutadien und Polyisopren oder Naturkautschuk, eingesetzt.

Zur Reduzierung des Rollwiderstandes wird in den "Grünen Reifen" der Füllstoff Ruß teilweise durch Silica ersetzt. Ein Hauptproblem beim Füllen von Kautschuk mit Silica ist der große Polaritätsunterschied der beiden Komponenten. Daraus ergibt sich eine schlechte Mischbarkeit. Bisher hat man die Anbindung des polaren Silicas an die unpolare Kautschukmatrix nur mittels Kopplungsreagenzien, wie z.B. Si-69® (Degussa AG), erreicht.

Für einen Einsatz des Blockcopolymers als Verträglichkeitsvermittler von beispielsweise hoch *cis*-BR und Silica in Vulkanisatmischungen wirkt sich jedoch ein geringer *cis*-1,4-Gehalt im Polydienteil des Blockcopolymerisates nachteilig auf die Verträglichkeit des Blockcopolymerisates mit der hoch-*cis*-BR-Kautschukmatrix und damit nachteilig auf die Produkteigenschaften aus.

Bei den Katalysatoren auf Basis der Seltenen Erden sind auch solche Katalysatorsysteme beschrieben, die die Homopolymerisation von polaren Monomeren gestatten. Beispiele dafür sind der Samarium-Katalysator [(C₅Me₅)SmH]₂ für die Polymerisation von Acrylaten [H.Yasuda et al., Macromolecules, 1993, 22, 7134; J. Am. Chem. Soc., 1992, 114, 4908; E. Ihara et al., Macromolecules, 1995, 28, 7886] und Lactonen [M. Yamashita et al., Macromolecules, 1996, 29, 1798] sowie für die Blockcopolymerisation von Ethylen mit Methacrylat oder ε-Caprolacton [H. Yasuda et al., Macromolecules, 1992, 25, 5115], der Samarium-Katalysator [(C₅Me₅)₂SmMe] für die Bildung von Triblockcopolymeren aus verschieden substituierten Acrylaten [E. Ihara et al., Macromolecules, 1995, 28, 7886] und zur Polymerisation von cyclischen Carbonaten [H. Yasuda, Prog. Polym. Sci., 2000, 25, 573], der Ytterbium-Katalysator Yb[C(SiMe₃)₃]₂ für die Polymerisation von Methacrylat [H. Yasuda et al. Prog. Polym. Sci., 1993, 18, 1097; E. Ihara et al., J. Organomet. Chem., 1999, 574, 40] und Neodym-Katalysatoren auf Basis von Nd(acac)₃(H₂O)₃/AlR₃ und Nd(naphthenat)₃/AlR₃ für die Polymerisation von Lactonen [Z. Shen et al., J: Polym. Sci., Polym. Chem. Ed., 1994, 32, 597] sowie auf Basis von Nd(ethylacetoacetat)₂(OPr) für die Blockcopolymerisation von cyclischen Carbonat mit Lactonen [H. Yasuda, Prog. Polym. Sci., 2000, 25, 573].

Die Herstellung von Blockcopolymeren mit einem hoch *cis*-1,4-Polydienteil und damit niedriger Glasübergangstemperatur ist bislang nicht möglich.

Aufgabe der vorliegenden Erfindung war es, ein Verfahren zur Blockcopolymerisation von konjugierten Diolefinen und polaren Monomeren zur Verfügung zu stellen, mit dem Copolymere erhalten werden, bei denen die Polymerzusammensetzung bei einem unverändert hohen *cis*-1,4-Gehalt im Polydienanteil von ≧ 60 %, bevorzugt ≧ 80 %, besonders bevorzugt ≧ 90 %, bezüglich des Gehalts an konjugierten Dienen und an polaren Monomeren variiert werden kann.

Mit den nachfolgend näher beschriebenen erfindungsgemäßen Katalysatorsystemen besteht die Möglichkeit ein Blockcopolymer herzustellen, bei dem bei unverändert hohem *cis*-1,4-Gehalt des Polydiens der Gehalt an polymerisierten Dienen und polaren Monomeren breit einzustellen ist. Diese hoch *cis*-haltigen Blockcopolymere sind mit den bekannten und in der Technik verwendeten Katalysatorsystemen auf Basis von Lithiumalkylen nicht möglich.

Mit den erfindungsgemäß eingesetzten Katalysatorsystemen ist es daher möglich, einerseits einen hohen *cis*-1,4-Gehalt im Polydienanteil einzustellen, um auf diese Weise ein Optimum an Verträglichkeit mit den eingesetzten hoch *cis*-haltigen Kautschuken zu erreichen, und andererseits über die Einstellung eines geeigneten Verhältnisses von polymerisierten Dienen und von polymerisierten polaren Monomeren für eine optimale Anbindung der Kautschukmischung an polare Komponenten zu sorgen, was sich anhand geringen Abriebs und langer Lebensdauer im technischen Einsatz der Mischungen zeigt.

Ein weiterer Gegenstand der vorliegenden Erfindung ist ein Verfahren zur Herstellung von Blockcopolymerisaten auf der Basis von konjugierten Dienen und polaren Monomeren, das dadurch gekennzeichnet ist, dass man konjugierte Diene in Gegenwart von Katalysatoren bestehend aus
A) mindestens einer Verbindung der Seltenen Erdmetalle,
B) mindestens einer aluminiumorganischen Verbindung und
C) mindestens einer Lewissäure
und in Gegenwart von inerten organischen Lösemitteln bis zu einem Umsatz ≧ 50 %, bevorzugt ≧ 70 %, polymerisiert, danach polare Monomere dem Polymerisationsgemisch zugibt und bis zu einem Umsatz ≧ 30 %, bevorzugt ≧ 50 %, polymerisiert und anschließend das erhaltene Blockcopolymerisat isoliert, wobei die konjugierten Diene in Mengen von 5 bis 30 Gew.-%, bevorzugt 10-20 Gew.-% und die polaren Monomere in Mengen von 1 bis 30 Gew.-%, bevorzugt 5-20 Gew.-%, in der Reaktionsmischung eingesetzt werden.

Das Molverhältnis, in denen die Katalysatorkomponenten (A) bis (C) eingesetzt werden, kann in weiten Grenzen variiert werden. Das Molverhältnis der Komponente (A) zu Komponente (B) beträgt 1:1 bis 1:1000, bevorzugt 1:3 bis 1:200, besonders bevorzugt 1:3 bis 1:100. Das Molverhältnis der Komponente (A) zu Komponente (C) beträgt 1:0,2 bis 1:15, bevorzugt 1:0,4 bis 1:5, besonders bevorzugt 1:0,5 bis 1:3. Bei Verwendung der Alumoxane oder als Komponente (B) kann auf die Komponente (C) ganz oder teilweise verzichtet werden.

Als Verbindungen der Seltenen Erdmetalle (Komponente (A)) kommen insbesondere solche in Frage, die ausgewählt sind aus:
- einem Alkoholat der Seltenen Erdmetalle,
- einem Phoshponat, Phosphinate und/oder Phosphate der Seltenen Erdmetalle,
- einem Carboxylat der Seltenen Erdmetalle,
- einer Komplexverbindung der Seltenen Erdmetalle mit Diketonen
- einer Additionsverbindung der Halogenide der Seltenen Erdmetalle mit einer Sauerstoff- oder Stickstoff-Donatorverbindung und/oder
- einer Allylverbindung der Seltenen Erdmetalle.

Die zuvor genannten Verbindungen der Seltenen Erdmetalle sind beispielsweise näher beschrieben in EP-B-011184 und WO 96/31544

Die Verbindungen der Seltenen Erdmetalle basieren insbesondere auf den Elementen mit den Ordnungszahlen 21, 39 und 57 bis 71. Bevorzugt werden als Seltene Erdmetalle eingesetzt Lanthan, Praseodym oder Neodym oder ein Gemisch von Elementen der Seltenen Erdmetalle, welches mindestens eines der Elemente Lanthan, Praseodym oder Neodym zu wenigstens 10 Gew.-% enthält. Ganz besonders bevorzugt werden als Seltene Erdmetalle Lanthan oder Neodym eingesetzt, die wiederum mit anderen Seltenen Erdmetallen abgemischt sein können. Der Anteil an Lanthan und/oder Neodym in einem solchen Gemisch beträgt besonders bevorzugt mindestens 30 Gew.-%.

Als Alkoholate, Phosphonate, Phosphinate, Phosphate und Carboxylate der Seltenen Erdmetalle oder als Komplexverbindungen der Seltenen Erdmetalle mit Diketonen kommen insbesondere solche in Frage, in denen die in den Verbindungen enthaltene organische Gruppe insbesondere geradkettige oder verzweigte Alkylreste mit 1 bis 20 Kohlenstoffatomen, bevorzugt 1 bis 15 Kohlenstoffatomen, enthält, wie Methyl, Ethyl, n-Propyl, n-Butyl, n-Pentyl, Isopropyl, Isobutyl, tert.-Butyl, 2-Ethylhexyl, neo-Pentyl, neo-Octyl, neo-Decyl oder neo-Dodecyl.

### Als Alkoholate der Seltenen Erden werden z.B. genannt:

Neodym(III)-n-propanolat, Neodym(III)-n-butanolat, Neodym(III)-n-decanolat, Neodym(III)-iso-propanolat, Neodym(III)-2-ethyl-hexanolat, Praseodym(III)-n-propanolat, Praseodym(III)-n-butanolat, Praseodym(III)-n-decanolat, Praseodym(III)-isopropanolat, Praseodym(III)-2-ethyl-hexanolat, Lanthan(III)-n-propanolat, Lanthan-(III)-n-butanolat, Lanthan(III)-n-decanolat, Lanthan(III)-iso-propanolat, Lanthan(III)-2-ethyl-hexanolat, bevorzugt Neodym(III)-n-butanolat, Neodym(III)-n-decanolat, Neodym(III)-2-ethyl-hexanolat.

### Als Phosphonate, Phosphinate und Phosphate der Seltenen Erden werden z.B. genannt:

Neodym(III)-dibutylphosphonat, Neodym(III)-dipentylphosphonat, Neodym(III)-dihexylphosphonat, Neodym(III)-diheptylphosphonat, Neodym(III)-dioctylphosphonat, Neodym(III)-dinonylphosphonat, Neodym(III)-didodecylphosphonat, Neodym(III)-dibutylphosphinat, Neodym(III)-dipentylphosphinat, Neodym(III)-dihexylphosphinat, Neodym(III)-diheptylphosphinat, Neodym(III)-dioctylphosphinat, Neodym-(III)-dinonylphosphinat, Neodym(III)-didodecylphosphinat, bevorzugt Neodym(III)-dioctylphosphonat und Neodym(III)-dioctylphosphinat.

### Als Carboxylate der Seltenen Erdmetalle sind geeignet:

Lanthan(III)-propionat, Lanthan(III)-diethylacetat, Lanthan(III)-2-ethylhexanoat, Lanthan(III)-stearat, Lanthan(III)-benzoat, Lanthan-(III)-cyclohexancarboxylat, Lanthan(III)-oleat, Lanthan(III)-versatat, Lanthan(III)-naphthenat, Praseodym(III)-propionat, Praseodym(III)-diethylacetat, Praseodym(III)-2-ethylhexanoat, Praseodym(III)-stearat, Praseodym(III)-benzoat, Praseodym(III)-cyclohexancarboxylat, Praseodym(III)-oleat, Praseodym(III)-versatat, Praseodym(III)-naphthenat, Neodym-(III)-propionat, Neodym(III)-diethylacetat, Neodym(III)-2-ethylhexanoat, Neodym(III)-stearat, Neodym(III)-benzoat, Neodym(III)-cyclohexancarboxylat, Neodym(III)-oleat, Neodym(III)-versatat, Neodym(III)-naphthenat, bevorzugt Neodym(III)-2-ethylhexanoat, Neodym(III)-versatat, Neodym(III)-naphthenat. Besonders bevorzugt ist Neodymversatat.

### Als Komplexverbindungen der Seltenen Erdmetalle mit Diketonen seien genannt:

Lanthan(III)-acetylacetonat, Praseodym(III)-acetylacetonat, Neodym(III)-acetylacetonat, bevorzugt Neodym(III)-acetylacetonat.

### Als Additionsverbindungen der Halogenide der Seltenen Erdmetalle mit einer Sauerstoff- oder Stickstoff-Donatorverbindung werden beispielsweise genannt:

Lanthan(III)-chlorid mit Tributylphosphat, Lanthan(III)-chlorid mit Tetrahydrofuran, Lanthan(III)-chlorid mit iso-Propanol, Lanthan(III)-chlorid mit Pyridin, Lanthan(III)-chlorid mit 2-Ethylhexanol, Lanthan(III)-chlorid mit Ethanol, Praseodym(III)-chlorid mit Tributylphosphat, Praseodym(III)-chlorid mit Tetrahydrofuran, Praseodym(III)-chlorid mit iso-Propanol, Praseodym(III)-chlorid mit Pyridin, Praseodym(III)-chlorid mit 2-Ethylhexanol, Praseodym(III)-chlorid mit Ethanol, Neodym(III)-chlorid mit Tributylphosphat, Neodym(III)-chlorid mit Tetrahydrofuran, Neodym(III)-chlorid mit iso-Propanol, Neodym(III)-Chlorid mit Pyridin, Neodym(III)-chlorid mit 2-Ethylhexanol, Neodym(III)-chlorid mit Ethanol, Lanthan(III)-bromid mit Tributylphosphat, Lanthan(III)-bromid mit Tetrahydrofuran, Lanthan(III)-bromid mit iso-Propanol, Lanthan(III)-bromid mit Pyridin, Lanthan(III)-bromid mit 2-Ethylhexanol, Lanthan(III)-bromid mit Ethanol, Praseodym(III)-bromid mit Tributylphosphat, Praseodym(III)-bromid mit Tetrahydrofuran, Praseodym(III)-bromid mit iso-Propanol, Praseodym(III)-bromid mit Pyridin, Praseodym(III)-bromid mit 2-Ethylhexanol, Praseodym(III)-bromid mit Ethanol, Neodym(III)-bromid mit Tributylphosphat, Neodym(III)-bromid mit Tetrahydrofuran, Neodym(III)-bromid mit iso-Propanol, Neodym(III)-bromid mit Pyridin, Neodym(III)-bromid mit 2-Ethylhexanol, Neodym(III)-bromid mit Ethanol, bevorzugt Lanthan(III)-chlorid mit Tributylphosphat, Lanthan(III)-chlorid mit Pyridin, Lanthan(III)-chlorid mit 2-Ethylhexanol, Praseodym(III)-chlorid mit Tributylphosphat, Praseodym(III)-chlorid mit 2-Ethylhexanol, Neodym(III)-chlorid mit Tributylphosphat, Neodym(III)-chlorid mit Tetrahydrofuran, Neodym(III)-chlorid mit 2-Ethylhexanol, Neodym(III)-chlorid mit Pyridin, Neodym(III)-chlorid mit 2-Ethylhexanol, Neodym(III)-chlorid mit Ethanol.

Als Allyl-Verbindungen der Seltenen Erdmetalle (Komponente (a)) kommen insbesondere solche in Frage, die ausgewählt sind aus den
- Tetra(allyl)-Komplexen der Seltenen Erden der Formel (I) [M (D)ₙ]⁺ [Ln (C₃R₅)₄]⁻,
- Tris(allyl)-Komplexen der Seltenen Erden der Formel (II) Ln(C₃R₅)₃(D)ₙ,
- Bis(allyl)-Komplexen der Seltenen Erden der Formel (III) Ln (C₃R₅)₂(X)(D)ₙ und
- Mono(allyl)-Komplexen der Seltenen Erden der Formel (IV) Ln (C₃R₅)(X)₂(D)ₙ,
wobei
- Ln: ein dreiwertiges Element der Seltenen Erden mit den Ordnungszahlen 21, 39, 57 bis 71 bedeutet,
- X: gleich oder verschieden ist und ein Anion bedeutet,
- D: gleich oder verschieden ist und ein neutraler Ligand bedeutet,
- M: für ein Element der Gruppe Ia des Periodensystems der Elemente (PSE) *[F.A. Cotton, G. Wilkinson, Anorganische Chemie, 4. Auflage, VCH Verlagsgesellschaft mbH, Weinheim, 1985]* steht,
- R: gleich oder verschieden ist und steht für Wasserstoff, für einen linearen oder verzweigten, gesättigten oder ein- oder mehrfach ungesättigten C₁-C₃₀-Alkylrest oder C₅-C₃₀-Cycloalkylrest, die gegebenenfalls ein oder mehrere Heteroatome, wie N, P, O, S enthalten können, für einen gegebenenfalls ein oder mehrere Heteroatome enthaltenden, gegebenenfalls ein- oder mehrfach durch Alkyl-, Alkinyl- oder Alkenylreste mit 1 bis 30 C-Atomen oder Phenylgruppen mit 6 bis 30 Kohlenstoffatomen substituierten C₆-C₃₀-Arylrest, der mit anderen 6 bis 30 Kohlenstoffatome enthaltenden Aromaten kondensiert sein kann, oder steht für eine durch Alkyl-, Alkenyl- oder Alkinylgruppen mit 1 bis 30 C-Atomen oder Phenylgruppen mit 6 bis 30 C-Atomen substituierte Silylgruppe,
- n: für eine beliebige Zahl von 0 bis 10, bevorzugt 0 bis 5.

Beispiele für Verbindungen der Formel (I) bis (IV) sind π-Allylkomplexe eines dreiwertigen Elementes der Seltenen Erden, wie z.B. die in *WO 96*/*31544* bereits beschriebenen Allylverbindungen.

Besonders geeignet sind die folgenden Allylverbindungen Nd(C₃H₅)₃(O₂C₄H₈), Nd(C₃H₅)₃, La(C₃H₅)₃, C₅Me₅*La(C₃H₅)₂, C₅H₅La(C₃H₅)₂, C₅Me₅Nd(C₃H₅)₂, C₅H₅Nd(C₃H₅)₂, La(C₃H₅)₂Cl(THF)₂, Nd(C₃H₅)₂Cl(THF)₂, La(C₃H₅)₂Br(THF)₂, La(C₃H₅)₂I(THF)₂, La(C₃H₅)Cl₂(THF)₂, Nd(C₃H₅)Cl₂(THF)₂, La(C₃H₅)Br₂(THF)₃, Nd(C₃H₅)Br₂(THF)₂.

Ganz besonders bevorzugt werden als Verbindungen der Seltenen Erdmetalle eingesetzt Neodymversatat, Neodymoctanoat und/oder Neodymnaphthenat.

Die oben genannten Verbindungen der Seltenen Erdmetalle können sowohl einzeln und auch als Gemisch miteinander eingesetzt werden.

Als aluminiumorganische Komponente (B) werden Verbindungen eingesetzt, ausgewählt aus einem Aluminiumtrialkyl, einem Dialkylaluminiumhydrid und/oder einem Alumoxan der Formeln (I) - (IV):

AIR₃ (I),

HAIR₂ (II),

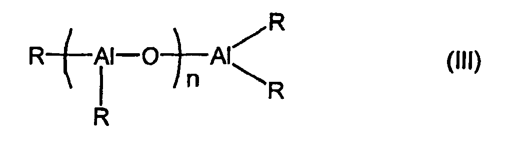

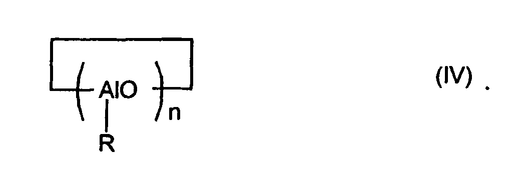

In den Formeln (I) bis (IV) der Komponente (B) kann R gleich oder verschieden sein und geradkettige und verzweigte Alkylreste mit 1 bis 10 C-Atomen, bevorzugt 1 bis 4 C-Atomen, Cycloalkylreste mit 3 bis 20 C-Atomen und Arylreste mit 6 bis 20 C-Atomen sowie n 1 bis 50 bedeuten.

### Beispiele für geeignete Aluminiumalkyle der Formeln (I) und (II) sind:

Trimethylaluminium, Triethylaluminium, Tri-n-propylaluminium, Triisopropylaluminium, Tri-n-butylaluminium, Triisobutylaluminium, Tripentylaluminium, Trihexylaluminium, Tricyclohexylaluminium, Trioctylaluminium, Diethylaluminiumhydrid, Di-n-butylaluminiumhydrid und Di-iso-butylaluminiumhydrid. Bevorzugt werden Triethylaluminium, Triisobutylaluminium und Di-iso-butylaluminiumhydrid.

Als Beispiele für Alumoxane (III) und (IV) werden genannt: Methylalumoxan, Ethylalumoxan und iso-Butylalumoxan, bevorzugt Methylalumoxan und iso-Butylalumoxan.

Die Aluminiumalkyle können einzeln oder im Gemisch miteinander eingesetzt werden.

Als Komponente (C) werden sogenannte Lewis-Säuren eingesetzt. Beispielhaft seien die Organometallhalogenide erwähnt, in denen das Metallatom der Gruppe 3a) oder 4a) angehört, sowie Halogenide der Elemente der Gruppe 3a), 4a) und 5a) des Periodensystems, wie es im "Handbook of Chemistry and Physics", 45th Edition 1964-65 dargestellt ist.

### Genannt werden insbesondere:

Methylaluminiumdibromid, Methylaluminiumdichlorid, Ethylaluminiumdibromid, Ethylaluminiumdichlorid, Butylaluminiumdibromid, Butylaluminiumdichlorid, Dimethylaluminiumbromid, Dimethylaluminiumchlorid, Diethylaluminiumbromid, Diethylaluminiumchlorid, Dibutylaluminiumbromid, Dibutylaluminiumchlorid, Methylaluminiumsesquibromid, Methylaluminiumsesquichlorid, Ethylaluminiumsesquibromid, Ethylaluminiumsesquichlorid, Aluminiumtribromid, Antimontrichlorid, Antimonpentachlorid, Siliciumtetrachlorid, Methyltrichlorsilan, Dimethyldichlorsilan, Trimethylchlorsilan, Ethyltrichlorsilan, Diethyldichlorsilan, Triethylchlorsilan, Vinyltrichlorsilan, Divinyldichlorsilan, Trivinylchlorsilan, Phosphortrichlorid, Phosphorpentachlorid, Zinntetrachlorid.

Bevorzugt werden Diethylaluminiumchlorid, Ethylaluminiumsesquichlorid, Ethylaluminiumdichlorid, Diethylaluminiumbromid, Ethylaluminiumsesquibromid und/oder Ethylaluminiumdibromid eingesetzt.

Als Komponente (C) können auch die Reaktionsprodukte aus Aluminiumverbindungen, wie sie als Komponente (B) beschrieben werden, mit Halogenen oder Halogenverbindungen, z.B. Triethylaluminium mit Brom oder Triethylaluminium mit Butylchlorid, eingesetzt werden. In diesem Fall kann die Umsetzung getrennt durchgeführt werden, oder die für die Umsetzung benötigte Menge der Alkylaluminiumverbindung wird zu der als Komponente (B) benötigten Menge addiert.

Bevorzugt werden Ethylaluminiumsesquichlorid, Butylchlorid und Butylbromid.

Bei Verwendung der Alumoxane (III) und (IV) als Komponente (B) kann auf die Komponente (C) ganz oder teilweise verzichtet werden, wie bereits vorher erwähnt.

Es ist auch möglich, den bewährten Katalysatorkomponenten (A) bis (C) noch eine weitere Komponente (D) zuzusetzen. Diese Komponente (D) kann ein konjugiertes Dien sein, das das gleiche Dien sein kann, das später mit dem Katalysator polymerisiert werden soll. Bevorzugt werden verwendet Butadien und/oder Isopren.

Wird die Komponente (D) dem Katalysator zugesetzt, so beträgt die Menge an (D) bevorzugt 1 bis 1000 mol, bezogen auf 1 mol der Komponente (A), besonders bevorzugt 1 bis 100 mol. Ganz besonders bevorzugt werden 1 bis 50 mol, bezogen auf 1 mol der Komponente (A), an (D) eingesetzt.

Bei der Herstellung der Kautschuklösungen werden die Katalysatoren in Mengen von 1 µmol bis 10 mmol, bevorzugt 10 µmol bis 5 mmol, der Verbindung der Seltenen Erdmetalle bezogen auf 100 g der Monomeren, eingesetzt.

Selbstverständlich ist es auch möglich, die Katalysatoren im beliebigen Gemisch untereinander einzusetzen.

Als konjugierte Diene (Diolefine) können in das erfindungsgemäße Verfahren z.B. 1,3-Butadien, 1,3-Isopren, 2,3-Dimethylbutadien, 2,4-Hexadien, 1,3-Pentadien und/oder 2-Methyl-1,3-pentadien, bevorzugt 1,3-Butadien und/oder 1,3-Isopren, eingesetzt werden.

Als polare Monomere können in das erfindungsgemäße Verfahren z.B. Verbindungen der Formel (V) bis (XI) eingesetzt werden,

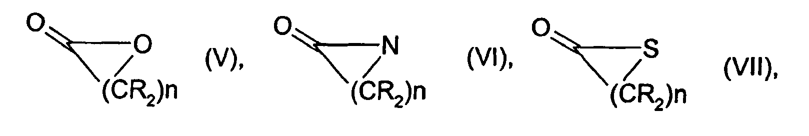

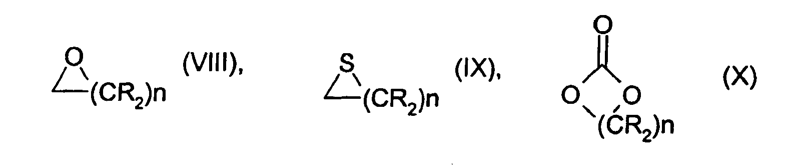

In den Formeln (V) bis (XI) kann R gleich oder verschieden sein und Wasserstoff, geradkettige und verzweigte Alkylreste mit 1 bis 10 C-Atomen, bevorzugt 1 bis 4 C-Atomen, Cycloalkylreste mit 3 bis 20 C-Atomen und Arylreste mit 6 bis 20 C-Atomen, wobei Alkylreste, Cycloalcylreste und Arylreste auch Heteroatome, wie Halogen, Sauerstoff, Schwefel oder Stickstoff, enthalten können sowie n 1 bis 10 bedeuten.

Verbindungen der Formel (V) bis (XI) sind beispielsweise Lactone, wie Caprolacton, Valerolacton, Butyrolacton, Lactame, wie Caprolactam, Valerolactam, Butyrolactam, Thiolactame, wie Thiocaprolactam, Thiovalerolactam, Thiobutyrolactam, Epoxide, wie Ethylenoxid, Propylenoxyd, Butenoxid, Cyclohexenoxid, Styroloxid, Epichlorhydrin, cyclische Sulfide, wie Ethylensulfid, Propylensulfid, Styrolsulfid und/oder cyclische Carbonate, wie Ethylencarbonat, Propylencarbonat, neo-Pentylcarbonat eingesetzt werden. Bevorzugt werden die Lactone eingesetzt, wobei bevorzugt ε-Caprolacton, γ-Valerolacton, δ-Valerolacton, γ-Butyrolacton und β-Butyrolacton zu nennen sind.

Als Lösemittel werden für das erfindungsgemäße Verfahren inerte, aromatische, aliphatische oder cycloaliphatische Lösemittel eingesetzt. Als Lösemittel sind beispielsweise Benzol, Toluol, Pentan, n-Hexan, iso-Hexan, Heptan und Cyclohexan, oder halogenierte Kohlenwasserstoffe, wie z.B. Dichlormethan und Chlorbenzol geeignet. Die Lösemittel können auch im Gemisch miteinander eingesetzt werden.

Das erfindungsgemäße Verfahren wird bevorzugt bei Temperaturen von ―20 bis 200°C, bevorzugt bei 0 bis 180°C, besonders bevorzugt bei 20 bis 160°C durchgeführt.

Das erfindungsgemäße Verfahren kann drucklos oder bei erhöhtem Druck (0,1 bis 12 bar) durchgeführt werden.

Das erfindungsgemäße Verfahren kann diskontinuierlich, halbkontinuierlich und kontinuierlich durchgeführt werden. Bei der kontinuierlichen Ausführungsform ist darauf zu achten, dass die Polymerisationszonen der konjugierten Diene von der Polymerisationszone der polaren Monomere getrennt ist und eine Rückvermischung der polaren Monomere in die Polymerisationszone der konjugierten Diene vermieden wird.

In einer vorteilhaften Ausführungsform der Blockcopolymerisation werden unter Durchmischung in einem oder mehreren kontinuierlich betriebenen Rührkesseln in Kaskade oder in einem durchmischenden Pfropfenströmungsreaktor und/oder einer Kombination beider Reaktortypen die konjugierten Diene in einer Mischung mit inerten Lösemittel durch Zugabe des Katalysators der Seltenen Erdmetalle bis zu einem Umsatz ≧ 50 % polymerisiert. Die aktive, nicht gestoppte Polymerlösung wird in einen weiteren Polymerisationsreaktor geleitet. Die Blockcopolymerisation erfolgt in mindestens einer weiteren Stufe nach Zugabe des polaren Monomeren zu der Polydienlösung unter Durchmischen in einem oder mehreren weiter kontinuierlich betriebenen Rührkesseln in Kaskade oder in einem durchmischendem Pfropfenströmungsreaktor und/oder einer Kombination beider Reaktortypen. Nach Erreichen des gewünschten Umsatzes an polaren Monomeren von ≧ 30 % kann der Katalysator durch Zugabe geringer Mengen beispielsweise an Wasser, Carbonsäuren und/oder Alkoholen desaktiviert und das Blockpolymere durch Eindampfen der Polymerlösung, durch Fällen mit einem Nichtlösemittel, wie z.B. Methanol, Ethanol und Aceton, oder durch Wasserdampfdestillation des Lösemittels isoliert werden. Während der Polymerisation und während der Polymerisolierung können Zusatzstoffe, wie Stabilisatoren, Alterungsschutzmittel und/oder Füllstoffe, zugesetzt werden.

Selbstverständlich ist es möglich, das gebildete Blockcopolymer von ggf. gebildeten Homopolymeren der Diene und/oder Homopolymeren der polaren Monomeren abzutrennen. Ein geeignetes Verfahren für diese Trennung ist z.B. die Methode der entmischenden Flüssigkeiten [R. Kuhn, Macromol. Chem., 1976, 177, 1525; 1980, 181, 725].

Die erhaltenen Blockcopolymerisate besitzen ein mittleres Molekulargewicht 5000 bis 10⁶ g/mol. Die T_{g}-Werte liegen bei < -90°C, bevorzugt < -100°C.

Die Besonderheit der Blockcopolymere besteht darin, dass nicht mischbare Polymere bzw. Polymerblöcke durch die Blockcopolymerbildung aneinander gekoppelt sind. Die dabei erhaltene Blockcopolymere besitzten aber immer noch die Eigenschaften der entsprechenden einzelnen Polymere, es treten beispielsweise gleiche oder ähnliche Schmelz- und/oder Glasübergangstemperaturen wie bei den entsprechenden einzelnen Polymeren auf. Durch den Einsatz eines unpolaren Diens und eines polaren Monomers weisen die Blockcopolymere amphiphilen Charakter auf, der zur Dispergierung, Phasenvermittlung oder für Beschichtungsanwendungen ausgenutzt werden kann. Durch die Möglichkeit das Verhältnis im Blockcopolymeren zwischen den verschiedenen Monomeren beliebig zu wählen, ist der polare oder unpolare Charakter des Blockcopolymeren beliebig genau einzustellen.

Für die Verwendung der Blockcopolymerisate gibt es vielfältige Möglichkeiten. Eine Einsatzgebiet liegt z.B. bei der Herstellung von Vulkanisatmischungen mit Silica für Reifen und Reifenbauteile. Die Blockcopolymere können als Ersatz für die herkömmlichen Kopplungsreagenzien (z.B. Si-69® von der Degussa AG) zur Anbindung von Silicafüllstoffen an die Kautschukmatrix eingesetzt werden, bei denen der Polydienteil an die Kautschukmatrix angebunden wird und der Polymerteil des polaren Polymeren an den Silicafüllstoff gebunden wird. Es ist aber auch eine reine Mischungshomogenisationswirkung des Blockcopolymeren ohne Vulkanisation denkbar. Weiterhin kann der polare Polymerteil des Blockcopolymeren in einer Vulkanisatmischung selbst als Füllstoff dienen und über den Polydienteil mit der Kautschukmatrix verbunden werden oder nur beigemischt werden.

Weiterhin ist es möglich, die Blockcopolymere als thermoplastische Elastomere einzusetzen, wobei der Elastomerteil durch die polymerisierten Polydiene und der Thermoplastteil durch die polymerisierten polaren Monomeren gebildet wird.

Die Blockcopolymere können außerdem als Blendmaterial zur Thermoplastmodifikation verwendet werden, beispielsweise zur Verbesserung der Schlägzähigkeit. Dabei kommen prinzipiell alle thermoplastischen Materialien in Frage, wie beispielsweise Polycarbonate, Polyvinylhalogenide (z.B. PVC), Polyamide, Polyester (z.B. PET, PBT), Polyether (z.B. Polypropylenoxid, Polyethylenoxid), Polyacrylate und deren Derivate (z.B. PMMA), Polyvinylacetat oder Polyoxymethylen.

### Beispiele

Alle Polymerisationsreaktionen wurden unter Luft- und Feuchtigkeitsausschluss in einer Schutzgasatmosphäre unter Schlenktechnik durchgeführt. Als Inertgas diente Argon.

Die Lösemittel *n*-Hexan und Cyclohexan werden über Aluminiumoxid/Kieselgel vorgetrocknet. ε-Caprolacton wurde von der Firma Aldrich bezogen, vor der Polymerisation destilliert und über Molekularsieb 4 Å aufbewahrt. Neodym-(III)-versatat wurde als 0.1 M Lösung in *n*-Hexan eingesetzt. DIBAH wurde von Aldrich als 0.1 M Lösung in Hexanfraktion gekauft und so eingesetzt. EASC wurde als Reinstoff von Witco bezogen. Davon wurde eine 1.0 M EASC-Lösung in *n*-Hexan hergestellt. Das zur Polymerfällung verwendete technische Methanol stammte von der Firma Kraemer & Martin GmbH. Den Stabilisator *2,2'*-Methylen-bis-(4-methyl-6-*tert*butylphenol) (Vulkanox® BKF) stellte die Bayer AG bereit.

IR-Messungen erfolgten am IR-Spektrometer: BOMEM ― Arid Zone™. Die Polymere wurden in Schwefelkohlenstoff gequollen und dann als dünne Filme zwischen zwei Kaliumbromidplatten aufgebracht und vermessen. Die Bestimmung der Mikrostruktur der Polybutadienproben erfolgte nach Literaturangaben [M.Kraft in *Struktur und Absorptionsspektroskopie der Kunststoffe,* VCH, Weinheim, **1973,** S. 93, E.O.Schmalz, W.Kimmer, *Z. Anal. Chem.* **1961,** *181*, 229.].

Die Polymerproben für die GPC wurden als Tetrahydrofuranlösungen einer Konzentration von 1 mg · mL⁻¹ zur Messung eingesetzt. Vor der Messung wurden die THF-Lösungen durch einen 0.2 µm Spritzenfilter filtriert. Die Kalibrierung der GPC erfolgte mit 1,4-Polybutadien-Standards von Fluka. Es wurden die 1,4-Polybutadien-Standards der Massen 2.000, 5.000, 20.000, 30.000, 66.000, 160.000, 200.000, 300.000 und 800.000 g · mol⁻¹ zur Kalibration verwendet. GPC-Anlage: Thermo Separation® Products. Säulensatz: 3 x PLgel 10µ Mixed-B. RI-Detektor: Shodex RI 74. Eluent: THF; Flussrate: 1,0 mL/min.

Die Umsatzbestimmungen erfolgten gravimetrisch; dabei wurden die Polymerlösungen nach der Probennahme (noch mit Lösemittel und Monomer) und nach der Trocknung (bei 65°C im Vakuumtrockenschrank) gewogen.

Die Trennung der Polymere erfolgte nach dem Prinzip der entmischenden Flüssigkeiten [R. Kuhn, Macromol. Chem., 1976, 177, 1525; 1980, 181, 725]. In einem 500 mL-Dreihalskolben mit KPG-Rührer und Rückflusskühler wurden 1.0 bis 1.2 g Polymerisat unter Zugabe von ca. 1 mg Stabilisator (2,2'-Methylen-bis(4-methyl-6-cyclohexylphenol)) in einem Lösemittelgemisch von 120 mL DMF und 180 mL MCH zwei Stunden unter Rückfluss erhitzt. Die Lösung wurde in Zentrifugengläser überführt und bei einer Drehzahl von 3000 min⁻¹ 18 Stunden lang zentrifugiert. Die erste Stunde wurde bei 60°C, danach bei 25° C zentrifugiert. Es wurde anschließend die obere Phase mit einer Pipette abgesaugt und die untere Phase über die Bodenöffnung des Zentrifugenglases von der mittleren Phase abgetrennt. Alle Phasen wurden in separate Glaskolben überführt und das Lösemittel im Vakuum abdestilliert. Die zurückgebliebenen Polymere wurden mit Kolben über Nacht im Vakuumtrockenschrank bei 125°C getrocknet. Durch Auswiegen konnten die einzelnen prozentualen Gewichtsanteile in den Phasen ermittelt werden.

Die NMR-Messungen erfolgten an dem Kernresonanzspektrometer der Fa. Bruker, Trägerfrequenz (¹H-NMR): 400.13 MHz, Lösemittel CDCl₃, Standard: Tetramethylsilan (δ = 0.00 ppm), Messtemperatur: 298 K.

| *Polymerisationsexperimente:* | |
|---|---|
| Autoklavflaschen | Eigenanfertigung der Bayer AG, 200 mL dickwandige Glasflasche mit Metallaufsatz, Teflondichtung und Sicherungsfeder. |
| 2 L-Glasautoklav | Büchi-Laborautoklav BEP 280 mit U-Rührer. |

### Beispiel 1 bis 4

### Durchführung der Polymerisation (Autoklav):

Der Autoklav (2 Liter-Glasautoklav Büchi-Laborautoklav BEP 280) wurde vor dem Experiment unter Vakuum bei 90°C ausgeheizt und sekuriert. Durch Anlegen eines Unterdrucks wurde unter Argon über eine Kanüle 1 L Lösemittel in den Autoklaven gesaugt. Der Autoklav wurde auf 60°C temperiert. Anschließend erfolgte über ein Septum die Zugabe von 1,3-Butadien. Es wurden dann die Katalysatorreagenzien Neodym-(III)-versatat (0,1 molare Lösung in Hexan), Diisobutylaluminiumhydrid (0,1 molare Lösung in Hexan) und Ethylaluminiumsesquichlorid (1 molare Lösung in Hexan) zugegeben. Für die Umsatz-Zeit-Messreihen wurden in bestimmten Zeitabständen über einen Kugelhahn Proben der Reaktionsmischung genommen. Diese Proben wurden mit MeOH (+Vulkanox® BKF) abgestoppt. Die Butadienpolymerisation lief bis zu hohen Umsätzen; dann wurde das polare Comonomer (ε-Caprolacton, Methylacrylat oder Vinylpropylether) zugegeben. Es folgte weiterhin eine Entnahme von Proben für die Umsatz-Zeit-Bestimmung. Am Versuchsende wurde die restliche im Autoklav verbliebene Reaktionsmischung in Methanol/Vulkanox® BKF gegossen und so die Polymerisation gestoppt. Die entnommenen Polymerproben wurden über Nacht bei 65°C im Vakuumtrockenschrank getrocknet.

**Tabelle 1: Beispiel 1 bis 4**

| Beispiel | 1 | 2 | 3 | 4 |
|---|---|---|---|---|
| Lösungsmittel | Cyclohexan | n-Hexan | n-Hexan | n-Hexan |
| Lösungsmittel | 1000 ml | 419 ml | 436 ml | 428 ml |
| Butadien | 190 g | 47,7 g | 44,4 g | 46,6 g |
| Nd(versatat)₃ | 0,4 mmol | 0,17 mmol | 0,17 mmol | 0,17 mmol |
| DIBAH | 8 mmol | 8,5 mmol | 5,1 mmol | 1,7 mmol |
| EASC | 0,27 mmol | 0,17 mmol | 0,17 mmol | 0,17 mmol |

| *Butadienpolymerisation* | | | | |
|---|---|---|---|---|
| Temperatur | 60 °C | 60°C | 60°C | 60°C |
| Zeit | 67 min | 90 min | 115 min | 123 min |
| Butadienumsatz | 95 % | 100 % | 100 % | 100 % |

| *Blockcopolymerisation* | | | | |
|---|---|---|---|---|
| Aktive BR-Lösung | 1190 g | 280,1 g | 267,7 g | 270,6 g |
| Comonomer | ε-Caprolacton | ε-Caprolacton | ε-Caprolacton | ε-Caprolacton |
| Comonomer | 182 g | 51,5 g | 51,5 g | 51,5 g |
| Temperatur | 60 °C | 60 °C | 60 °C | 60 °C |
| Zeit | 118 min | 80 min | 128 min | 110 min |
| Comonomerumsatz | 59,9 % | 100 % | 100 % | 100 % |
| Polymer (gesamt) | 289 g | 92,9 g | 87,6 g | 90,3 g |

### Beispiel 1: Trennung des Copolymeren + Analytik:

Die Trennung des Copolymeren erfolgte nach der Methode der entmischenden Flüssigkeiten, wobei das Blockcopolymere an der Phasengrenze mit einem Gesamtmassenanteil von 10 Gew.-% am Gesamtpolymer im Falle des Versuches mit dem polaren Monomer ε-Caprolacton isoliert werden konnte.

Das isolierte Blockcopolymere zeigte im IR und im ¹H-NMR Signale beider polymerisierten Monomere:

### Poly(ε-caprolacton)-Anteil im Blockcopolymeren

IR: ν̃ = 713 (w), 732 (w), 754 (w), 842 (w), 934 (w), 962 (w), 1048 (m), 1067 (w), 1108 (m), 1191 (s), 1244 (s), 1295 (m), 1367 (m), 1397 (w), 1420 (w), 1437 (w), 1471 (w), 1634 (w), 1726 (s), 2866 (m), 2944 (s).
¹H-NMR (CDCl₃): δ = 1.37 (m, 2H, 4-C*H*₂), 1.65 (m, 4H, 3,5-C*H*₂), 2.31 (t, ³J_{HH} = 7.5 Hz, 2H, O-COC*H*₂), 4.06 (t, ³J_{HH} = 6.7 Hz, 2H, COOC*H*₂).

### cis-1,4-Poly(butadien)-Anteil im Blockcopolymeren

IR: ν̃ = 737 (s), 778 (w), 911 (w), 965 (w), 993 (m), 1019 (w), 1093 (w), 1161 (w), 1238 (w), 1260 (w), 1308 (m), 1402(m), 1432 (s), 1451 (s), 1656 (s), 1738 (w), 2852 (s), 2938 (s), 3006 (s).
¹H-NMR (CDCl₃):δ = 2.08 (m, 4H, C*H*₂), 5.38 (m, 2H, C*H*).

Um auszuschließen, dass lediglich zwei Homopolymere (Polybutadien und Poly-ε-caprolacton) bei der Polymerisation entstanden sind, wurde nach der Trennung mit entmischenden Flüssigkeiten eine GPC-Untersuchung der erhaltenen Fraktionen durchgeführt, die zeigt, dass das GPC-Signal des Blockcopolymeren im hochmolekularsten Bereich liegt.

Das mittlere Molekulargewicht betrug ca. 300.000 g/mol, der T_{g}-Wert ―103°C. Der Dien-Anteil betrug 30 Gew.-%, der Anteil an polaren Monomeren 70 Gew.-%. Der *cis*-1,4-Anteil in Dienblock betrug 96 %.

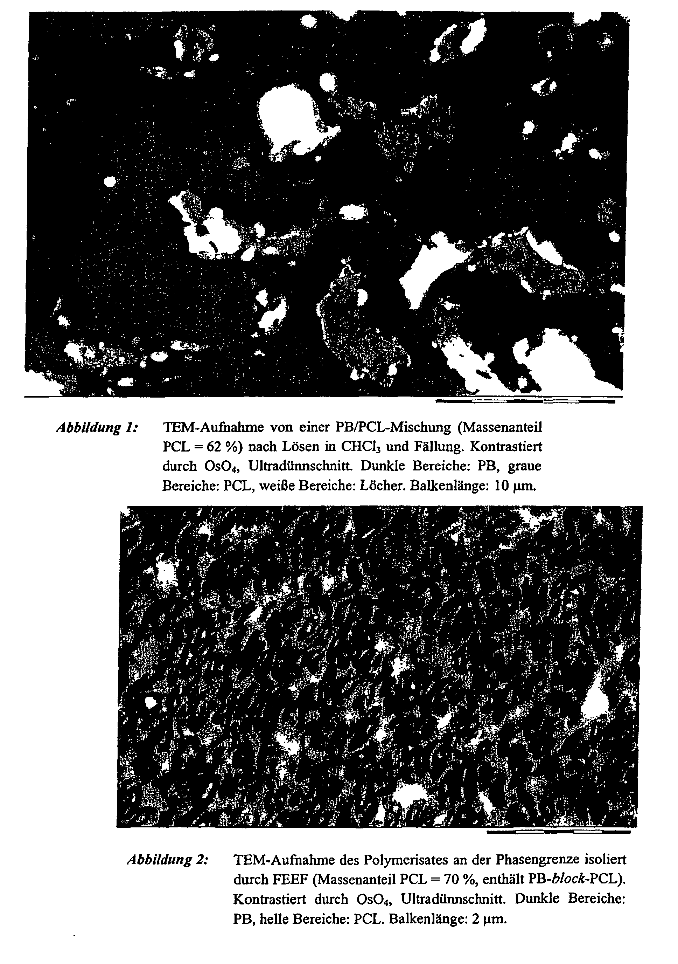

Ein weiterer Beweis für die Entstehung von Blockcopolymeren wurde aus der Morphologie des Polymerisates erhalten. Mit Transmissionselektronenmikroskopie (TEM) wurde dazu das Blockcopolymerisat (Abb. 2) untersucht und dessen Morphologie mit einem hergestellten *cis*-1,4-Polybutadien/Poly-ε-caprolacton-Blend (Abb. 1) verglichen. Dazu wurden in einem 2L-Rundkolben 0.90 g Poly-ε-caprolacton und 0.55 g *cis*-1,4-Polybutadien in 1 L CHCl₃ durch Rühren gelöst. Die Polymermischung wurde in 500 mL MeOH (+ 0.1 g Vulkanox® BKF) gefällt und anschließend im Vakuumtrockenschrank bei 50°C getrocknet.

### Gegenbeispiel 5 bis 7

### Durchführung der Polymerisation (Autoklav):

Die Durchführung der Polymerisation erfolgte analog den Beispielen 1 bis 4. Die Ansatzgrößen und Ergebnisse sind in Tabelle 2 zusammengefasst.

**Tabelle 2: Gegenbeispiel Beispiel 5 bis 7**

| Beispiel | 5 | 6 | 7 |
|---|---|---|---|
| Lösungsmittel | n-Hexan | Cyclohexan | Cyclohexan |
| Lösungsmittel | 434 ml | 1000 ml | 1000 ml |
| Butadien | 46,5 g | 120 g | 120 g |
| Nd(versatat)₃ | 0,17 mmol | 0,2 mmol | 0,2 mmol |
| DIBAH | 8,5 mmol | 4 mmol | 4 mmol |
| EASC | 0,17 mmol | 0,13 | 0,13 |

| *Butadienpolymerisation* | | | |
|---|---|---|---|
| Temperatur | 60 °C | 60°C | 60°C |
| Zeit | 120 min | 83 min | 260 min |
| Butadienumsatz | 100 % | 93 % | 99 % |

| *Blockcopolymerisation* | | | |
|---|---|---|---|
| Aktive BR-Lösung | 275,0 g | 1200 g | 1200 g |
| Comonomer | Octamethylcyclotetrasiloxan | Methylacrylat | Vinylpropylether |
| Comonomer | 72,1 g | 190 g | 200 g |
| Temperatur | 60 °C | 60 °C | 60 °C |
| Zeit | 168 min | 252 min | 200 min |
| Comonomerumsatz | nicht nachweisbar | nicht nachweisbar | nicht nachweisbar |
| Polymer (gesamt) | 37,5 g | 112 g | 119 g |

## Patentansprüche

1. Verfahren zur Herstellung von Blockpolymerisaten auf Basis von konjugierten Dienen und polaren Monomeren, wobei die Blockpolymerisate die polymerisierten konjugierten Diene in Mengen von 5 bis 95 Gew.-% und die polymerisierten polaren Monomeren in Mengen von 95 bis 5 Gew.-% enthalten, und wobei die polymerisierten Diene einen cis-1,4-Anteil von > 60 Gew.-% aufweisen, **dadurch gekennzeichnet, dass** man die konjugierten Diene in Gegenwart von Katalysatoren bestehend aus
(A) mindestens einer Verbindung der Seltenen Erdmetalle,
(B) mindestens einer aluminiumorganischen Verbindung und
(C) mindestens einer Lewissäure
und in Gegenwart von inerten organischen Lösemitteln bis zu einem Umsatz von ≧ 50 Gew.-% polymerisiert, danach die polaren Monomere dem Polymerisationsgemisch zugibt und bis zu einem Umsatz von ≧ 30 Gew.-% polymerisiert und anschließend das erhaltene Blockcopolymerisat isoliert, wobei die konjugierten Diene in Mengen von 5 bis 30 Gew.-% und die polaren Monomere in Mengen von 1 bis 30 Gew.-% in die Reaktionsmischung eingesetzt werden.

2. Verfahren nach Anspruch 1, **dadurch gekennzeichnet, dass** man als konjugierte Diene 1,3-Butadien, 1,3-Isopren, 2,3-Dimethylbutadien, 2,4-Hexadien, 1,3-Pentadien und/oder 2-Methyl-1,3-pentadien einsetzt.

3. Verfahren nach Anspruch 1 bis 2, **dadurch gekennzeichnet, dass** man als polare Monomere Lactone, Lactame, Thiolactame, Epoxide, cyclische Sulfide, und/oder cyclische Carbonate werden die Lactone eingesetzt, wobei bevorzugt ε-Carprolacton, γ-Valerolacton, δ-Valerolacton, γ-Butyrolacton und β-Butyrolacton zu nennen sindLactone, Lactame, Epoxide, Acrylate, cyclische Carbonate, cyclische Spiroverbindungen, cyclische Sulfide und/oder cyclische Siloxane, insbesondere Lactone, einsetzt.

4. Verfahren nach Anspruch 1 bis 3, **dadurch gekennzeichnet, dass** man als polare Monomere ε-Carprolacton, γ-Valerolacton, δ-Valerolacton, γ-Butyrolacton und/oder β-Butyrolacton einsetzt.

5. Verfahren nach Anspruch 1 bis 4, **dadurch gekennzeichnet, dass** als Verbindungen der Seltenen Erdmetalle deren Alkoholate, Phosphonate, Phosphinate, Phosphate und Carboxylate sowie die Komplexverbindungen der Seltenen Erdmetalle mit Diketonen, die Additionsverbindungen der Halogenide der Seltenen Erdmetalle mit einer Sauerstoff- oder Stickstoff-Donator-Verbindung und Allylverbindungen der Seltenen Erdmetalle eingesetzt werden.

6. Verfahren nach Anspruch 1 bis 5, **dadurch gekennzeichnet, dass** als Verbindungen der Seltenen Erdmetalle Neodymversatat, Neodymoctanat und/oder Neodymnaphthenat eingesetzt werden.

7. Verfahren nach Anspruch 1 bis 6, **dadurch gekennzeichnet, dass** als aluminiumorganische Verbindung Aluminiumtrialkyl, Dialkylaminiumhydrid und/oder Alumoxane eingesetzt werden.

8. Verfahren nach Anspruch 1 bis 7, **dadurch gekennzeichnet, dass** als LewisSäure Organometallhalogenide der Gruppe IIIA und IVA und/oder Halogenide der Elemente der Gruppe IIIA, IVA und VA des Periodensystems eingesetzt werden.

9. Verfahren nach den Anspruch 1 bis 8, **dadurch gekennzeichnet, dass** als aliphatische Lösemittel Butan, Pentan, Hexan oder Heptan oder als aromatische Lösemittel Benzol, Toluol, Ethylbenzol oder Dimethylbenzol oder Mischungen aus diesen einsetzt werden.

## Claims

1. Process for the preparation of block copolymers based on conjugated dienes and polar monomers, the block polymers comprising the polymerized conjugated dienes in amounts of 5 to 95 wt. % and the polymerized polar monomers in amounts of 95 to 5 wt. %, the polymerized dienes having a cis-1,4 content of > 60 wt. %, **characterized in that** the conjugated dienes are polymerized in the presence of catalysts composed of
(A) at least one compound of the rare earth metals,
(B) at least one organoaluminium compound and
(C) at least one Lewis acid
and in the presence of inert organic solvents up to a conversion of ≥ 50 wt. %, the polar monomers are then added to the polymerization mixture and polymerization is carried out up to a conversion of ≥ 30 wt. %, and the resulting block copolymer is then isolated, the conjugated dienes being employed in the reaction mixture in amounts of 5 to 30 wt. % and the polar monomers in amounts of 1 to 30 wt. %.

2. Process according to Claim 1, **characterized in that** conjugated dienes used are 1,3-butadiene, 1,3-isoprene, 2,3-dimethylbutadiene, 2,4-hexadiene, 1,3-pentadiene and/or 2-methyl-1,3-pentadiene.

3. Process according to Claim 1 or 2, **characterized in that** polar monomers used are lactones, lactams, thiolactams, epoxides, acrylates, cyclic carbonates, cyclic spiro compounds, cyclic sulphides and/or cyclic siloxanes.

4. Process according to Claim 1 to 3, **characterized in that** polar monomers used are ε-caprolactone, γ-valerolactone, δ-valerolactone, γ-butyrolactone and/or β-butyrolactone.

5. Process according to Claim 1 to 4, **characterized in that** compounds of the rare earth metals that are used are their alcoholates, phosphonates, phosphinates, phosphates and carboxylates and also the complex compounds of the rare earth metals with diketones, the addition compounds of the halides of the rare earth metals with an oxygen or nitrogen donor compound, and allyl compounds of the rare earth metals.

6. Process according to Claim 1 to 5, **characterized in that** compounds of the rare earth metals that are used are neodymium versatate, neodymium octanate and/or neodymium naphthenate.

7. Process according to Claim 1 to 6, **characterized in that** aluminium trialkyl, dialkylaluminium hydride and/or alumoxanes are used as organoaluminium compound.

8. Process according to Claim 1 to 7, **characterized in that** organometallic halides of group IIIA and IVA and/or halides of elements of group IIIA, IVA and VA of the periodic table are used as Lewis acid.

9. Process according to Claim 1 to 8, **characterized in that** aliphatic solvents used are butane, pentane, hexane or heptane or aromatic solvents used are benzene, toluene, ethylbenzene or dimethylbenzene or mixtures thereof.

## Revendications

1. Procédé de préparation de polymères blocs à base de diènes conjugués et de monomères polaires, dans lequel les polymères blocs des diènes conjugués polymérisés sont présents en quantités de 5 à 95 % en poids et les monomères polaires polymérisés sont présents en quantités de 95 à 5 % en poids, et dans lequel les diènes polymérisés présentent une proportion de cis-1,4- supérieure à 60 % en poids, **caractérisé en ce que** les diènes conjugués sont polymérisés en présence de catalyseurs constitués de
(A) au moins un composé des métaux des terres rares,
(B) au moins un composé organoaluminium, et
(C) au moins un acide de Lewis,
et en présence de solvants organiques inertes, jusqu'à un taux de conversion ≥ 50 % en poids, puis les monomères polaires du mélange de polymérisation sont ajoutés et polymérisés jusqu'à un taux de conversion ≥ 30 % en poids, et le copolymère bloc obtenu est ensuite isolé, les diènes conjugués étant utilisés en quantités de 5 à 30 % en poids et les monomères polaires étant utilisés en quantités de 1 à 30 % en poids dans le mélange réactionnel.

2. Procédé selon la revendication 1, **caractérisé en ce que**, en tant que diènes conjugués, on utilise le 1,3-butadiène, le 1,3-isoprène, le 2,3-diméthylbutadiène, le 2,4-hexadiène, le 1,3-pentadiène et/ou le 2-méthyl-1,3-pentadiène.

3. Procédé selon les revendications 1 et 2, **caractérisé en ce que**, en tant que monomères polaires, on utilise des lactones, des lactames, des thiolactames, des époxydes, des sulfures cycliques et/ou des carbonates cycliques, en mentionnant de préférence la ε-caprolactone, la γ-valérolactone, la δ-valérolactone, la γ-butyrolactone et la β-butyrolactone, des lactones, des lactames, des époxydes, des acrylates, des carbonates cycliques, des composés spiro cycliques, des sulfures cycliques et/ou des siloxanes cycliques, en particulier des lactones.

4. Procédé selon les revendications 1 à 3, **caractérisé en ce que**, en tant que monomères polaires, on utilise la ε-caprolactone, la γ-valérolactone, la δ-valérolactone, la γ-butyrolactone et/ou la β-butyrolactone.

5. Procédé selon les revendications 1 à 4, **caractérisé en ce que**, en tant que composés des métaux des terres rares, on utilise leurs alcoolates, leurs phosphonates, leurs phosphinates, leurs phosphates et leurs carboxylates ainsi que les composés complexes des métaux des terres rares avec des dicétones, les composés d'addition des halogénures des métaux des terres rares avec un composé donneur d'oxygène ou d'azote, et les composés allyliques des métaux des terres rares.

6. Procédé selon les revendications 1 à 5, **caractérisé en ce que**, en tant que composés des métaux des terres rares, on utilise le versatate de néodyme, l'octanate de néodyme et/ou le naphténate de néodyme.

7. Procédé selon les revendications 1 à 6, **caractérisé en ce que**, en tant que composé organoaluminium, on utilise un dialkyl-aluminium, un hydrure de dialkylaluminium et/ou des alumoxanes.

8. Procédé selon les revendications 1 à 7, **caractérisé en ce que**, en tant qu'acide de Lewis, on utilise des halogénures organométalliques des groupes IIIA et IVA et/ou des halogénures des éléments des groupes IIIA, IVA et VA du système périodique.

9. Procédé selon les revendications 1 à 8, **caractérisé en ce que**, en tant que solvant aliphatique, on utilise le butane, le pentane, l'hexane ou l'heptane ou, en tant que solvant aromatique, on utilise le benzène, le toluène, l'éthylbenzène ou le diméthylbenzène, ou des mélanges de ceux-ci.
